Europäisches Patentamt

European Patent Office

Office européen des brevets

(11) Veröffentlichungsnummer : **0 129 049**
**B1**

(12) # EUROPÄISCHE PATENTSCHRIFT

(45) Veröffentlichungstag der Patentschrift :
27.07.88

(51) Int. Cl.⁴ : **H 02 K 29/06**, H 02 K 1/14

(21) Anmeldenummer : 84105411.7

(22) Anmeldetag : 12.05.84

(54) **Elektronisch kommutierter Gleichstrommotor.**

(30) Priorität : 20.05.83 DE 3318463

(43) Veröffentlichungstag der Anmeldung :
27.12.84 Patentblatt 84/52

(45) Bekanntmachung des Hinweises auf die Patenterteilung : 27.07.88 Patentblatt 88/30

(84) Benannte Vertragsstaaten :
DE FR GB IT NL

(56) Entgegenhaltungen :
EP-A- 0 040 484
DE-A- 2 015 018
DE-B- 1 298 615

(73) Patentinhaber : ALCATEL N.V.
Strawinskylaan 537 (World Trade Center)
NL-1077 XX Amsterdam (NL)
FR GB IT NL
Standard Elektrik Lorenz Aktiengesellschaft
Hellmuth-Hirth-Strasse 42
D-7000 Stuttgart 40 (DE)
DE

(72) Erfinder : Feigel, Josef, Dr.
Rennweg 76
D-8300 Landshut (DE)

(74) Vertreter : Pohl, Heribert, Dipl.-Ing et al
Standard Elektrik Lorenz AG Patent- und Lizenzwesen Postfach 30 09 29
D-7000 Stuttgart 30 (DE)

EP 0 129 049 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen elektronisch kommutierten Gleichstrommotor mit einem permanentmagnetischen Außenläufer, der aus einem glockenförmigen Körper aus magnetisierbarem Werkstoff und einem auf dessen Innenumfang angeordneten Permanentmagneten besteht, und einem mit einer ein Wechselfeld erzeugenden Wicklung versehenen Ständer, welcher doppel-T-förmig ausgebildet und auf dem gemeinsamen Joch des Doppel-T die Ständerwicklung angeordnet ist, bei dem der Ständer aus einem Jochpaket und zwei Polpaketen zusammengesetzt ist, jedes Polpaket auf der gleichen Seite mit einer Verlängerung in Umfangsrichtung versehen ist und die Polpakete derart ausgebildet sind, daß ein konstanter Luftspalt zwischen Ständer und Läufer entsteht, die Ständerwicklungen von zwei auf dem Jochpaket angeordneten Spulenkörpern derart getragen sind, daß jeweils eine Jochpakethälfte mit einem Polpaket einen Ständerpol bildet und die Achsen der Jochpakethälften parallel zur Längsachse des ganzen Jochpakets einander entgegengerichtet versetzt sind. Ein solcher Gleichstrommotor ist in der EP-A-125 502 beschrieben. Diese Druckschrift fällt unter Art. 54(3) EPÜ.

Bei den beschriebenen Motoren handelt es sich um einsträngige, zweipulsig bestromte, kollektorlose und permanent erregte Gleichstrommotoren mit Außenläufer. Diese Gleichstrommotoren sind in der Lage, nach Bestromung der Ständerwicklung aus dem Stand wieder selbsttätig anzulaufen, wenn an der Motorwelle nur ein geringes Bremsmoment vorhanden ist. Die Bestromung der Ständerwicklung erfolgt bei diesen Gleichstrommotoren in Abhängigkeit von der Drehstellung des Läufers, wobei diese von einem Sensor, beispielsweise einem Hall-Generator, erfaßt wird und das dabei gewonnene Signal eine elektronische Schaltung steuert, welche die Ständerwicklung zur Drehmomentbildung in der erforderlichen Weise an eine Gleichspannungsquelle legt.

Bei diesen Gleichstrommotoren wird mit Hilfe der elektronisch gesteuerten Ständerwicklung eine Ständer-Wechselfeld erzeugt, welches im Zusammenwirken mit dem Erregerfeld des Permanentmagneten ein pulsierendes Moment bildet. Wenn die Polachse des Permanentmagneten und die Polachse des Wechselfeldes keine Verdrehung zueinander aufweisen, dann ist das Drehmoment Null. Der Läufer kann nicht aus eigener Kraft anlaufen.

Für die Bildung eines Anlaufdrehmomentes ist es erforderlich, daß zwischen der Polachse des Permanentmagneten und der Polachse des Ständerwechselfeldes ein von Null verschiedener Winkel vorhanden ist. Das bedeutet, daß bei stromloser Ständerwicklung die Polachse des Permanentmagneten um einen bestimmten Drehwinkel gegenüber der Polachse des Wechselfeldes verdreht sein muß.

Bei dem im EP-A-125 502 vorgeschlagenen Gleichstrommotor wird die erforderliche Verdrehung des Läufers gegenüber dem Ständer in der Ruhestellung des Motors dadurch verwirklicht, daß jedes Polpaket auf der gleichen Seite mit einer Verlängerung in Umfangsrichtung versehen ist. Der Ständer besitzt deshalb für den Läufer einen nicht konstanten magnetischen Widerstand auf dem Umfang des Ständers. In der Ruhestellung des Motors nimmt der Läufer gegenüber dem Ständer eine solche Stellung ein, daß zwischen der Ständerlängsachse und der Polachse der Permanentmagneten ein von Null verschiedener Winkel vorhanden ist.

Für den sicheren Anlauf des Gleichstrommotors ist es erforderlich, daß der Läufer nur eine Ruhestellung besitzt. Bei dem im EP-A-125 502 vorgeschlagenen Motor kann es vorkommen, daß er eine weitere Ruhestellung einnimmt, aus welcher er nicht mehr selbsttätig anläuft.

Die der Erfindung zugrundeliegende Aufgabe besteht deshalb darin, den gemäß EP-A-125 502 vorgeschlagenen Gleichstrommotor derart zu verbessern, daß der Läufer nur eine definierte Ruhestellung aufweist.

Diese Aufgabe ist erfindungsgemäß dadurch gelöst, daß das Ende jeder Verlängerung im radial äußeren Bereich in Umfangsrichtung mit einem nasenartigen Ansatz versehen ist.

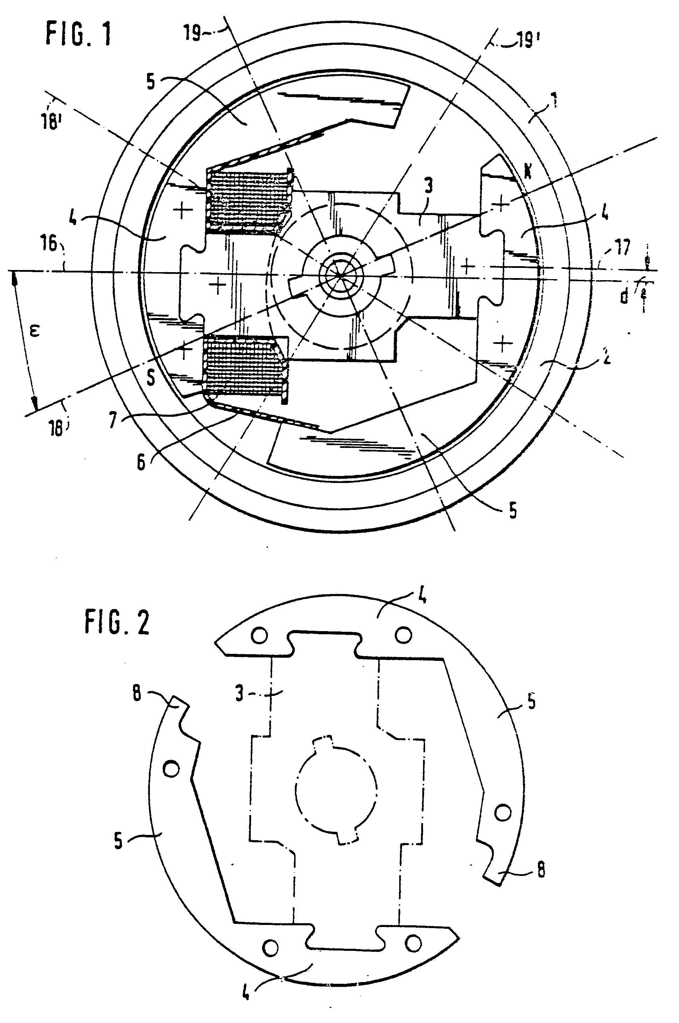

Die Verbesserung des Gleichstrommotors ist nachstehend anhand der Figuren 1 und 2 erläutert. Es zeigen :

Fig. 1 die Draufsicht auf Läufer und Ständer des Gleichstrommotors gemäß EP-A-125 502, und

Fig. 2 das Ständerblechpaket des verbesserten Gleichstrommotors.

Fig. 1 zeigt Läufer und Ständer des Gleichstrommotors von einer Stirnseite her, nachdem ein Befestigungsflansch und eine Leiterplatte, welche die für die Kommutierung erforderliche elektrische Schaltung enthält, entfernt worden sind. Bei dem gezeigten Gleichstrommotor handelt es sich um einen Außenläufermotor in zweipoliger Ausführung. Der Läufer besteht aus einem glockenförmigen Körper 1 aus einem magnetisierbaren Werkstoff, wie Weicheisen, an dessen Innenumfang ein Dauermagnet 2, beispielsweise ein kunststoffgebundener, plattenförmiger Dauermagnet, eingesetzt ist, der in der eingesetzten Weise magnetisiert ist.

Der Ständer besteht aus drei Blechpaketteilen, nämlich einem Jochpaket 3 und zwei Polpaketen 4, welche mittels schwalbenschwanzförmiger Passungen formschlüssig miteinander verbunden sind. Die Polpakete 4 weisen nicht nur die von Doppel-T-Ständerwicklungen her bekannte Form eines Pilzhutes auf, sondern sie besitzen beide auf der gleichen Seite in Umfangsrichtung eine Verlängerung 5, die sich bei dem gezeigten Ausführungsbeispiel mechanisch über etwa 70 Winkelgrade erstreckt, so daß sich jedes Polpaket mechanisch insgesamt über etwa 150 Winkelgrade erstreckt. Auf dem Jochpaket 3 sind die Spulenkörper 6 mit den Ständerwicklungen 7 angeordnet. (In Fig. 1 sind nur ein Spulenkörper 6 und eine Ständerwicklung gezeichnet). Wie weiter aus Fig. 1 ersichtlich, besitzt der Motor die Längsache 16. Da die Ständerwicklungen 7 asymmetrisch zur Längsachse 16 angeordnet sind, ist die Polachse 17 des Wechselfeldes um den Abstand d parallel zur Längsachse 16 versetzt. Der Läufer besitzt die Polachse 18 des Permanentmagneten ; im rechten Winkel zu dieser liegt die neutrale Zone 19. In Fig. 1 ist die Polachse 18 des Permanentmagneten in der Lage gezeichnet, welche sie einnimmt, wenn die Ständerwicklung nicht bestromt ist. Dann ist die Polachse 18 des Permanentmagneten gegenüber der Polachse 17 des Wechselfeldes um den Winkel ε verdreht.

Wie bereits erwähnt, kann es bei dem aus Fig. 1 ersichtlichen Gleichstrommotor vorkommen, daß sich der Läufer in der Ruhestellung durch ein zweites relatives Minimum der magnetischen Energie nicht in die Lage einstellt, welche durch die Polachse 18 des Permanentmagneten definiert ist, sondern in eine davon abweichende Lage, welche in Fig. 1 durch die Polachse 18' verdeutlicht ist. Wenn der Läufer in dieser Lage liegt, dann ist die neutrale Zone 19' des Läufers ebenfalls verdreht.

Fig. 2 zeigt nun das Mittel, welches sicherstellt, daß der Läufer stets nur eine bestimmte Ruhestellung einnimmt, wenn die Ständerwicklungen nicht von Strom durchflossen sind, nämlich die Stellung, die durch die Polachse 18 definiert ist. Bei dem aus dem Polpaket 3 und den Jochpaketen 4 bestehenden Ständer sind die Verlängerungen 5 nochmals durch die Nasen 8 verlängert.

Durch diese Nasen ist sichergestellt, daß der Läufer stets nur die durch die Polachse 18 definierte Ruhelage einnimmt.

## Patentanspruch

Elektronisch kommutierter Gleichstrommotor mit einem permanentmagnetischen Außenläufer (1, 2), der aus einem glockenförmigen Körper (1) aus magnetisierbarem Werkstoff und einem auf dessen Innenumfang angeordneten Permanentmagneten (2) besteht, und einem mit einer ein Wechselfeld erzeugenden Wicklung (7) versehenen Ständer (3, 4), welcher doppel-T-förmig ausgebildet und auf dem gemeinsamen Joch (3) des Doppel-T die Ständerwicklung (7) angeordnet ist, bei dem der Ständer aus einem Jochpaket (3) und zwei Polpaketen (4) zusammengesetzt ist, jedes Polpaket (4) auf der gleichen Seite mit einer Verlängerung (5) in Umfangsrichtung versehen ist und die Polpakete (4) derart ausgebildet sind, daß ein konstanter Luftspalt zwischen Ständer und Läufer entsteht, die Ständerwicklungen (7) von zwei auf dem Jochpaket (3) angeordneten Spulenkörpern (6) derart getragen sind, daß jeweils eine Jochpakethälfte mit einem Polpaket (4) einen Ständerpol bildet und die Achsen (17) der Jochpakethälften parallel zur Längsachse (16) des ganzen Jochpakets (3) einander entgegengerichtet versetzt sind, und bei dem das Ende jeder Verlängerung (5) im radial äußeren Bereich in Umfangsrichtung mit einem nasenartigen Ansatz (8) versehen ist.

## Claim

An electronically commutated dc motor comprising a permanent-magnet external rotot (1, 2) wich consists of a dome-shaped body (1) of magnetizable material and of a permanent magnet (2) disposed on the inner circumference thereof, and further comprises a stator (3, 4) provided with a winding (7) producing an alternating field, with the stator having a double-T-shaped design, and the stator winding (7) being disposed on the common yoke (3) of the double-T, in which the stator is composed of one yoke stack (3) and two pole stacks (4), each pole stack (4) is provided with an extension (5) in the circumferential direction on the same side and the pole stacks (4) are designed in such a way that a constant air gap is formed between the stator and the rotor, the stator windings (7) are supported by two coilforms (6) disposed on the yoke stack (3) in such a way that in each case on yoke-stack half with one pole stack (4) forms a stator pole and the axes (17) of the yoke-stack halves are oppositely staggered in relation to each other parallel with the longitudinal axis (16) of the entire yoke stack (3) and in which the end of each extension (5) is provided with a lug-like projection (8) in the radially outer area in the circumferential direction.

## Revendication

Moteur à courant continu à commutation électronique comprenant un rotor à aimant permanent (1, 2) constitué par un corps en forme de dôme (1) en matériau magnétisable et un aimant permanent (2) disposé sur la circonférence intérieure de celui-ci, ainsi qu'un stator (3, 4) pourvu d'un enroulement (7) produisant un champ alternatif, ce stator ayant une forme en double-T et l'enroulement (7) du stator étant disposé sur la branche commune (3) du double-T, moteur dans lequel le stator est composé d'un empilage de culasse (3) et de deux empilages polaires (4), chaque empilage polaire (4) étant pourvu, du même côté, d'une extension (5) dans le sens circonférentiel et les empilages polaires étant conformés de façon qu'un entrefer constant soit obtenu entre le stator et le rotor, les enroulements de stator (7) étant portés par deux carcasses (6) prévues sur l'empilage de culasse (3), chaque moitié de la culasse et l'un des empilages polaires (4) formant un pôle de stator et les axes (17) des moitiés d'empilage de culasse étant décalés l'un par rapport à l'autre, parallèlement à l'axe longitudinal (16) de l'ensemble du stator et dans lequel l'extrémité de chacune des extensions (5) est pourvue, dans sa partie radialement la plus éloignée, d'un prolongement (8) en forme de nez s'étendant circonférentiellement.

FIG. 1

FIG. 2